# EUROPÄISCHE PATENTANMELDUNG

(11) **EP 4 043 738 A1**
(43) Veröffentlichungstag der Anmeldung: **17.08.2022**
(21) Anmeldenummer: 22154402.6
(22) Anmeldetag: 01.02.2022
(51) Int. Cl.: F16B 13/14

(54) **ANKERSET UND VERFAHREN ZUM EINKLEBEN EINER ANKERSTANGE DES ANKERSETS IN EIN ANKERLOCH**

(30) Priorität: 16.02.2021 DE 102021103618; 08.09.2021 DE 102021123224
(71) Anmelder: fischerwerke GmbH & Co. KG, 72178 Waldachtal (DE)
(72) Erfinder: Krumbeck, Markus, 72108 Rottenburg a.N. (DE); Schwab, Johann, 72202 Nagold (DE)
(74) Vertreter: Suchy, Ulrich Johannes

(57) **Zusammenfassung**

Die Erfindung betrifft ein Ankerset (1) mit einer Ankerstange (2), die zu einem Einkleben in ein Ankerloch in einem Ankergrund vorgesehen ist. Die Erfindung schlägt vor, die Ankerstange (2) in einem beispielsweise gewirkten Schlauch als elastisch kompressiblen Klebstoffträger (3) anzuordnen und den Klebstoffträger (3) mit einer Schlauchfolie als Hülle (4) zu umhüllen, die den Klebstoffträger (3) auf der Ankerstange (2) komprimiert. Nach Einbringen in das Ankerloch wird die Hülle (4) mit einem Aufreißband (5) aufgerissen, vom Klebstoffträger (3) abgezogen und aus dem Ankerloch heraus gezogen, worauf hin der Klebstoffträger (3) expandiert, die Ankerstange (2) im Ankerloch zentriert und in der Hülle (4) enthaltenen und den Klebstoffträger (3) durchsetzenden Klebstoff nach außen gegen das Ankerloch und nach innen gegen die Ankerstange (2) beaufschlagt. Nach einem Aushärten des Klebstoffs ist die Ankerstange (2) im Ankerloch festgelegt.

## Beschreibung

Die Erfindung betrifft ein Ankerset mit einer in ein Ankerloch einklebbaren Ankerstange mit den Merkmalen des Oberbegriffs des Anspruchs 1 und ein Verfahren zum Einkleben der Ankerstange in das Ankerloch mit den Merkmalen des Oberbegriffs des Anspruchs 10. "Set" ist hier im Sinne einer Zusammenstellung mehrerer Bestandteile zu verstehen.

Es sind sogenannte chemische Verankerungen bekannt, bei denen eine Ankerstange mit einem Klebstoff oder allgemein einer aushärtenden, eine oder mehrere Komponenten aufweisenden Masse in einem Ankerloch in einem Ankergrund befestigt wird. Das Ankerloch ist typischerweise ein in den Ankergrund gebohrtes, zylindrisches Loch. Der Ankergrund kann aus beliebigem Material bestehen, beispielsweise ist er eine Wand, eine Decke, ein Boden eines Gebäudes oder ein Pfosten eines Bauwerks aus beispielsweise Mauerwerk, Beton oder Holz. Als Ankerstangen werden oft Gewindestangen verwendet, wobei es auch spezielle Ankerstangen für chemische Verankerungen gibt und grundsätzlich beliebige Stangen als Ankerstangen chemisch in einem Ankerloch verankert, das heißt befestigt, werden können.

Aufgabe der Erfindung ist, ein Ankerset mit einer Ankerstange, die bei einem Einkleben in ein Ankerloch einfach handhabbar ist, und ein Verfahren zum Einkleben der Ankerstange in das Ankerloch vorzugschlagen.

Diese Aufgabe wird erfindungsgemäß durch die Merkmale der Ansprüche 1 und 10 gelöst. Das erfindungsgemäße Ankerset weist eine Ankerstange, einen Klebstoff aufweisenden, die Ankerstange umschließenden Klebstoffträger, eine Hülle, die den Klebstoffträger mit der in ihm enthaltenen Ankerstange umschließt, und ein Aufreißband auf, mit dem die Hülle in einem Ankerloch so weit aufreißbar ist, dass sie im Ankerloch von der Ankerstange und dem Klebstoffträger abziehbar und aus dem Ankerloch herausziehbar ist. Weitere Bestandteile schließt die Erfindung nicht aus.

Auch wenn es als "Band" bezeichnet wird, muss das Aufreißband nicht die Form eines Bandes aufweisen, sondern kann beispielsweise auch ein Faden, ein Draht oder eine Schnur sein. Es handelt sich um ein zugfestes und typischerweise jedoch nicht zwingend biegeschlaffes Element. Aufreißbänder sind zum Aufreißen von beispielsweise Folienverpackungen und Kartonverpackungen bekannt.

Die Ankerstange ist eine grundsätzlich beliebige Stange, insbesondere ist sie eine Gewindestange oder wahlweise eine spezielle, für eine chemische Verankerung vorgesehene Ankerstange. Insbesondere ist die Ankerstange aus Metall, vorzugsweise aus Stahl. Insbesondere ist der Ankerstange eine Mutter und darüber hinaus insbesondere eine Unterlegscheibe zugeordnet, derart, dass die Mutter und die Unterlegscheibe mit der Ankerstange korrespondieren und mit dieser zusammen ein Teil des Ankersets bilden.

Die Ankerstange und der Klebstoffträger sind separate Bauteile in dem Sinne, dass der Klebstoffträger nicht gleichzeitig die Ankerstange bildet.

Das Ankerset ist vorzugsweise in einem Ankergrund aus einem Vollbaustoff, insbesondere aus Holz, eingeklebt, also verankert.

Der Klebstoffträger, in dem die Ankerstange angeordnet ist, ist insbesondere schlauchförmig und weist vorzugsweise von einer der Ankerstange abgewandten Außenseite zu einer der Ankerstange zugewandten Innenseite des Klebstoffträgers durchgehende Klebstofföffnungen auf. Er ist elastisch kompressibel, so dass er sich an das Ankerloch anpasst und die Ankerstange im Ankerloch zentriert. Vorzugsweise hält der Klebstoffträger die Ankerstange bis zum Aushärten des Klebstoffs in dem Ankerloch, beispielsweise auch dann, wenn das Ankerloch über Kopf nach oben gebohrt ist. Insbesondere passt sich der Klebstoffträger derart gleichmäßig an eine Lochwand des Ankerlochs an, dass die Ankerstange koaxial zum Ankerloch zentriert wird. Hierdurch entfällt eine händische Zentrierung der Ankerstrange im Ankerloch.

Es können die Klebstofföffnungen des Klebstoffträgers und/oder ein Zwischenraum zwischen dem Klebstoffträger und der Ankerstange teilweise oder vollständig mit dem Klebstoff gefüllt sein und/oder es kann sich Klebstoff in der Hülle auf der Außenseite des Klebstoffträgers befinden. Der Klebstoff ist allgemein eine aushärtende, eine oder mehrere Komponenten aufweisende Masse, die nach einem Entfernen der Hülle aushärtet und die Ankerstange durch Formschluss und/oder Stoffschluss in dem Ankerloch befestigt, was auch als Verankerung bezeichnet wird.

Nach dem Aushärten bildet der Klebstoff vorzugsweise eine feste Struktur, die - sofern vorhanden - die Klebstofföffnungen des Klebstoffträgers durchsetzt und dadurch die Ankerstange mit der Lochwand des Ankerlochs verbindet.

Der Klebstoffträger kann einen festen, vorzugsweise offenporigen, elastischen Schaum aufweisen, wobei vorzugsweise Poren von der Außenseite bis zur Innenseite des Klebstoffträgers so ineinander übergehen, dass die von der Außenseite zur Innenseite durchgehenden Klebstofföffnungen gebildet sind. Eine Ausgestaltung der Erfindung sieht einen dickenelastischen Netzschlauch als Klebstoffträger vor. "Netz" bedeutet, dass der Schlauch gleichmäßig oder ungleichmäßig verteilt angeordnete Öffnungen aufweist, die die von der Außenseite zur Innenseite durchgehenden Klebstofföffnungen bilden. "Dickenelastisch" bedeutet, dass eine Wanddicke des Netzschlauches elastisch verringerbar ist. Der Netzschlauch, das heißt seine die (Klebstoff-) Öffnungen umgebenden Teile können aus einem festen, elastischen Schaum bestehen. Möglich ist auch ein aus einer oder mehreren Natur- und/oder Kunstfasern gestrickter, gewirkter, gewobener oder in anderer Weise hergestellter Netzschlauch, das heißt ein eine Maschenware aufweisender Schlauch oder ein Vlies- oder Filzschlauch. Die Aufzählung ist beispielhaft und nicht abschließend.

Vorzugsweise ist der Klebstoffträger in der Hülle auf der Ankerstange elastisch komprimiert, so dass sich nach dem Entfernen der Hülle eine Wanddicke des Klebstoffträgers vergrößert. Dadurch lässt sich das Ankerset, so lange sich die Ankerstange und der Klebstoffträger in der Hülle befinden, einfach in ein Ankerloch einbringen, dessen Durchmesser mindestens so groß und vorzugsweise etwas größer als ein Durchmesser des in der Hülle enthaltenen Ankersets ist. Nach dem Aufreißen und Abziehen der Hülle von dem Klebstoffträger und der Ankerstange und Herausziehen der Hülle aus dem Ankerloch mit dem Ankerband expandiert der Klebstoffträger und formt sich an die Lochwand des Ankerlochs an, sofern der Durchmesser des Ankerlochs nicht größer und vorzugsweise kleiner als der Durchmesser des expandierten Klebstoffträgers auf der Ankerstange ohne die Hülle ist. Der Klebstoffträger hält und zentriert die Ankerstange im Ankerloch. Außerdem verkleinert der Klebstoffträger, wenn er nach dem Entfernen der Hülle expandiert, ein für den Klebstoff zur Verfügung stehendes Volumen auf der Außenseite des Klebstoffträgers zwischen der Lochwand des Ankerlochs und dem Klebstoffträger, - sofern vorhanden - in den Klebstofföffnungen des Klebstoffträgers und/oder in dessen Poren und an der Innenseite des Klebstoffträgers zwischen dem Klebstoffträger und der Ankerstange. Dadurch wird der Klebstoff sowohl radial nach außen gegen die Lochwand des Ankerlochs, als auch radial nach innen gegen die Ankerstange beaufschlagt, wodurch ein guter Verbund der Ankerstange im Ankerloch mit dem Ankergrund durch den Klebstoff erreicht wird.

Die Hülle ist vorzugsweise ebenfalls ein Schlauch, beispielsweise ein Folienschlauch. Sie ist mit dem Aufreißband vorzugsweise der Länge nach so weit und an einer Stelle aufreißbar, dass sie mit dem Aufreißband von dem Klebstoffträger und der in ihm befindlichen Ankerstange abziehbar ist.

Eine Ausgestaltung der Erfindung sieht vor, dass das Aufreißband von einem ersten Ende zu einem zweiten Ende der Hülle und zurück verläuft. Dadurch ist es möglich, an dem ersten Ende an dem Aufreißband zu ziehen und dadurch die Hülle an dem zweiten Ende beginnend bis zum ersten Ende aufzureißen und durch fortgesetzten Zug am Aufreißband die Hülle zwischen dem die Ankerstange umschließenden Klebstoffträger und dem Ankerloch heraus zu ziehen.

Eine Ausgestaltung der Erfindung sieht vor, dass ein Ende der Ankerstange aus der Hülle vorsteht. Der Klebstoffträger und der Klebstoff sind vorzugsweise vollständig innerhalb der Hülle enthalten, so dass das Ende der Ankerstange auch aus dem Klebstoffträger vorsteht. Bei dieser Ausgestaltung der Erfindung lässt sich die Ankerstange an dem aus der Hülle vorstehenden Ende halten und so tief in ein Ankerloch einbringen, dass das aus der Hülle vorstehende Ende der Ankerstange auch aus dem Ankerloch vorsteht, wobei ein Überstand der Ankerstange aus der Hülle und aus dem Ankerloch gleich oder verschieden sein können.

Vorzugsweise ist das Ankerset, das heißt die Ankerstange, der Klebstoffträger, der Klebstoff und die Hülle in einer hermetisch dichten Umverpackung enthalten, die ein Abbinden des Klebstoffs verhindert. Die Umverpackung kann ebenfalls schlauchförmig sein und schließt vorzugsweise die Ankerstange auf ihrer gesamten Länge ein. Die Umverpackung wird vor dem Einbringen des Ankersets in das Ankerloch entfernt, woraufhin der Klebstoff abzubinden beginnt. Die Umverpackung kann als Bestandteil des Ankersets aufgefasst werden. Sie ermöglicht eine Lagerung des Ankersets für Tage, Wochen und vorzugsweise Monate oder Jahre, ohne dass das Ankerset durch unbeabsichtigtes ungewolltes Aushärten des Klebstoffs unbrauchbar wird.

Zum Einkleben der Ankerstange des erfindungsgemäßen Ankersets in ein Ankerloch in einem Ankergrund sieht das erfindungsgemäße Verfahren mit den Merkmalen des Anspruchs 10 vor, zunächst die Umverpackung vom Ankerset beziehungsweise von den anderen Bestandteilen des Ankersets zu entfernen, sofern eine solche Umverpackung vorhanden ist. Anschließend wird die Ankerstange mit dem sie umschließenden Klebstoffträger, der Hülle und dem enthaltenen Klebstoff in das Ankerloch in dem Ankergrund eingebracht, wobei vorzugsweise ein Ende der Ankerstange aus dem Ankerloch vorsteht. Die Ankerstange wird so in das Ankerloch eingebracht, dass das Aufreißband aus dem Ankerloch heraus reicht und mit Fingern einer Hand gegriffen werden kann. Danach wird an dem Aufreißband gezogen, so dass es die Hülle aufreißt und von dem Klebstoffträger, in dem sich die Ankerstange befindet, zieht und die Hülle zwischen dem Klebstoffträger und der Lochwand des Ankerlochs aus dem Ankerloch heraus zieht. Vorzugsweise expandiert der Klebstoffträger nach dem Abziehen der Hülle vom Klebstoffträger und Herausziehen der Hülle aus dem Ankerloch, so dass der Klebstoffträger die Ankerstange im Ankerloch zentriert und hält. Ebenfalls vorzugsweise beaufschlagt der expandierende Klebstoffträger den Klebstoff radial nach außen gegen die Lochwand des Ankerlochs und radial nach innen gegen die Ankerstange. Der Klebstoff härtet aus und bildet eine feste Struktur, die die Ankerstange durch Stoffschluss und/oder Formschluss im Ankerloch festlegt, das heißt verankert.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: Bestandteile eines erfindungsgemäßen Ankersets;
- Figur 2: eine Ankerstange in einem Klebstoffträger des Ankersets aus Figur 1;
- Figur 3: die Ankerstange mit dem Klebstoffträger aus Figur 2 in einer Hülle des erfindungsgemäßen Ankersets;
- Figur 4: die Ankerstange mit dem Klebstoffträger und der Hülle aus Figur 3 in einer Umverpackung des Ankersets aus Figur 1; und
- Figur 5: die Ankerstange mit dem Klebstoffträger und der Hülle aus Figur 3 in einem Ankerloch.

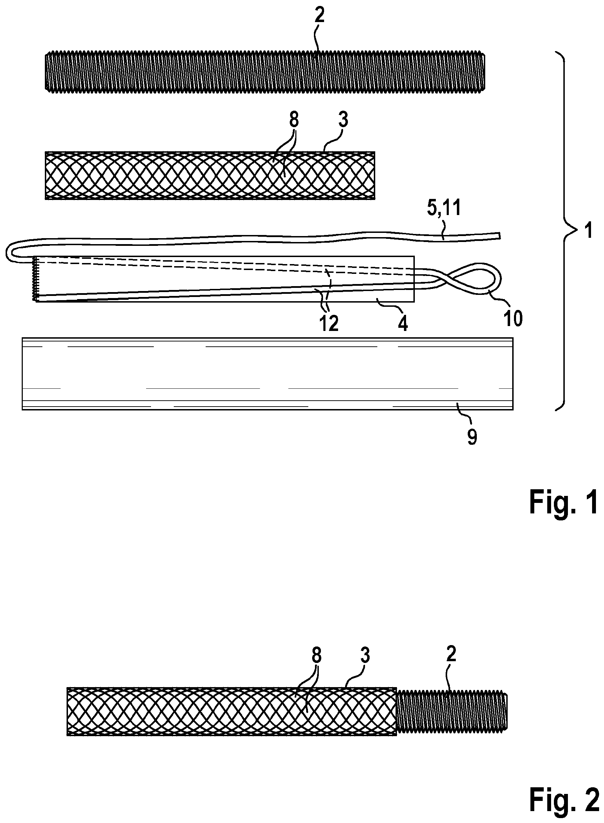

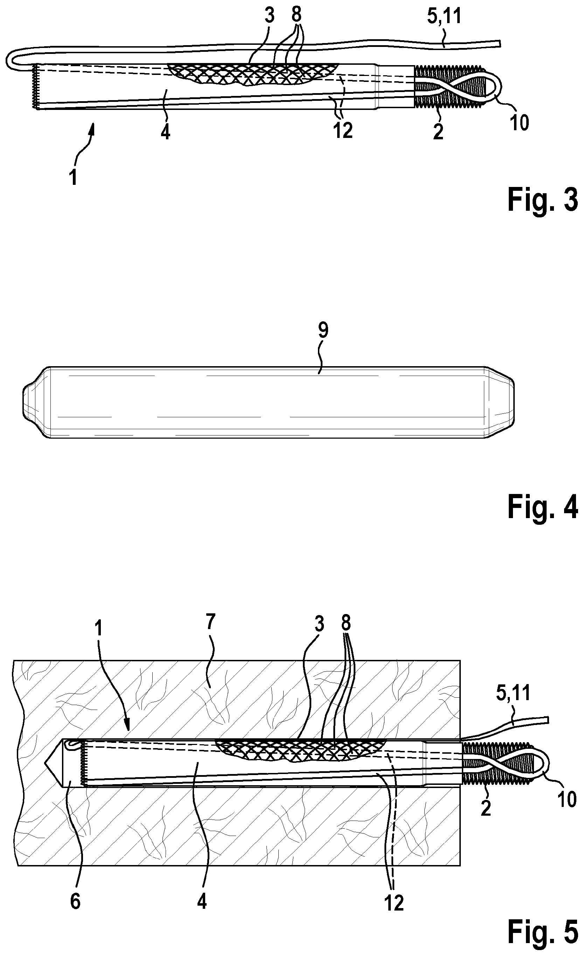

Figur 1 zeigt die Einzelteile beziehungsweise Bestandteile eines erfindungsgemäßen Ankersets 1. Das Ankerset 1 weist eine Ankerstange 2, einen Klebstoffträger 3 und eine Hülle 4 mit einem Aufreißband 5 auf. Die Ankerstange 2 ist zu einem Einkleben in ein Ankerloch 6 in einem Ankergrund 7 vorgesehen (Figur 5).

Im Ausführungsbeispiel ist die Ankerstange 2 eine Gewindestange, wobei grundsätzlich beliebige Stangen als Ankerstange verwendbar sind. Es gibt auch spezielle Ankerstangen mit beispielsweise nach Art einer Tannenbaumprofilierung axial hintereinander angeordneten Kegelstümpfen (nicht dargestellt) zum Einkleben in ein Ankerloch beziehungsweise allgemein für sogenannte chemische Verankerungen. Eine chemische Verankerung ist eine Befestigung einer Ankerstange oder allgemein eines Ankers in einem Ankerloch mit einer aushärtenden Masse wie beispielsweise einem Klebstoff.

Der Klebstoffträger 3 ist im Ausführungsbeispiel ein Netzschlauch beziehungsweise ein Schlauch mit Klebstofföffnungen 8, die von einer der Ankerstange 2 abgewandten Außenseite zu einer der Ankerstange 2 zugewandten Innenseite des Klebstoffträgers 3 durchgehen. Im Ausführungsbeispiel ist der Klebstoffträger 3 ein flexibler, elastischer Gewirkschlauch aus beispielsweise einem Kunstfaden oder Naturfaden. Möglich ist beispielsweise auch ein Netzschlauch aus einer anderen Maschenware, aus einem Vlies oder einem Filz oder aus einem festen, elastischen, offenporigen oder geschlossenporigen Schaum. Die Aufzählung ist beispielhaft und nicht abschließend. Der Klebstoffträger 3 ist kompressibel und dickenelastisch, das heißt seine Wanddicke lässt sich elastisch verkleinern. Im Ausführungsbeispiel ist der Klebstoffträger 3 auch in anderen Richtungen elastisch. In einem Anwendungszustand, den Figur 2 zeigt, umschließt der schlauchförmige Klebstoffträger 3 die Ankerstange 2. Im Ausführungsbeispiel ist der Klebstoffträger 3 kürzer als die Ankerstange 2, so dass ein Ende der Ankerstange 2 aus dem Klebstoffträger 3 axial vorsteht. Die Klebstofföffnungen 8 sind beispielsweise Öffnungen in einer Wand des schlauchförmigen Klebstoffträgers 3, ineinander übergehende Poren eines offenporigen Schaums des Klebstoffträgers 3 und/oder Freiräume zwischen Fäden, Fasern oder dergleichen des den Klebstoffträger 3 bildenden Netzschlauchs.

Die Hülle 4 ist im Ausführungsbeispiel ein Folienschlauch, der den Klebstoffträger 3 umschließt, in dem sich die Ankerstange 2 befindet. Die Hülle 4 ist an einem Ende geschlossen. An einem gegenüberliegenden Ende, an dem die Ankerstange 2 aus dem netzschlauchförmigen Klebstoffträger 3 vorsteht, steht die Ankerstange 2 auch aus der Hülle 4 vor, wobei die Hülle 4 den Klebstoffträger 3 vorzugsweise axial überlappt. Ein den Klebstoffträger 3 axial überlappender Abschnitt der Hülle 4 weist einen verkleinerten Durchmesser auf und liegt an der Ankerstange 2 an. Ein dichter Abschluss der Hülle 4 an der Ankerstange 2 ist möglich, allerdings nicht zwingend erforderlich, jedenfalls dann nicht, wenn das Ankerset 1 eine noch zu erläuternde Umverpackung 9 aufweist.

Ein Durchmesser der Hülle 4 ist kleiner als ein Außendurchmesser des Klebstoffträgers 3, wenn sich der Klebstoffträger 3 ohne der Hülle 4 auf der Ankerstange 2 befindet. Das bedeutet, dass die Hülle 4 den Klebstoffträger 3 auf der Ankerstange 2 radial komprimiert, das heißt die Wanddicke des Klebstoffträgers 3 elastisch verkleinert, wenn die Hülle 4 den Klebstoffträger 3, in dem sich die Ankerstange 2 befindet, umschließt.

In der Hülle 4 befindet sich ein nicht dargestellter Klebstoff, der den die Klebstofföffnungen 8 aufweisenden Klebstoffträger 3 bis zur Ankerstange 2 durchsetzt. Vorzugsweise nimmt der Klebstoff allen Freiraum, den der Klebstoffträger 3 zwischen der Ankerstange 2 und der Hülle 4 frei lässt, ein. Der Klebstoff härtet nach Entfernen der Hülle 4 und/oder nach Entfernen der noch zu erläuternden Umverpackung 9 beispielsweise durch Verdunsten eines Lösungsmittels, das auch Wasser sein kann, oder durch Zutritt von Luftfeuchtigkeit aus. Allgemein handelt es sich bei dem Klebstoff um eine nach Entfernen der Hülle 4 und/oder der Umverpackung 9 aushärtende Masse.

Das Aufreißband 5 ist ein Kunststoffband, wie es zum Aufreißen von beispielsweise Kartonverpackungen oder Folienverpackungen bekannt ist. Das Band muss nicht zwingend aus einem Kunststoff bestehen und es kann beispielsweise auch eine Schnur oder ein Faden, eventuell auch ein Draht anstelle des Aufreißbandes 5 beziehungsweise als Aufreißband 5 verwendet werden (nicht dargestellt). Das Aufreißband 5 dient dazu, die Hülle 4 in dem Ankerloch 6 aufzureißen, im Ankerloch 6 von dem die Ankerstange 2 umschließenden Klebstoffträger 3 abzuziehen und aus dem Ankerloch 6 heraus zu ziehen.

Das Aufreißband 5 verläuft in einer Längsrichtung der schlauchförmigen Hülle 4 von dem geschlossenen Ende oder von nahe dem geschlossenen Ende bis zum offenen Ende der Hülle 4, wo das Aufreißband 5 unter Bildung einer über das offene Ende der Hülle 4 überstehenden Schlaufe 10 zurück bis zum geschlossenen Ende oder bis nahe an das geschlossene Ende der Hülle 4 verläuft. Am geschlossenen Ende der Hülle 4 weist das Aufreißband 5 einen freien Abschnitt 11 auf, der länger als die Hülle 4 ist. Zwei in der Längsrichtung der schlauchförmigen Hülle 4 verlaufende haftende Abschnitte 12 des Aufreißbandes 5 haften an der Hülle 4, sie sind beispielsweise mit der Hülle 4 verklebt oder verschweißt. Die haftenden Abschnitte 12 des Aufreißbandes 5 können an der Innenseite und/oder an der Außenseite der Hülle 4 angeordnet sein. Vorzugsweise verläuft der haftende Abschnitt 12 des Aufreißbandes 5, der in den freien Abschnitt 11 übergeht, an der Innenseite der Hülle 4. Das Aufreißband 5 kann gerade achsparallel entlang der Hülle 4 verlaufen. Das Aufreißband 5 kann beispielsweise auch schräg in einem Winkel, beispielsweise wendelförmig oder wellenförmig von dem geschlossenen Ende zu dem offenen Ende der Hülle 4 und/oder umgekehrt verlaufen.

Die Umverpackung 9 ist im Ausführungsbeispiel ebenfalls ein Folienschlauch, der die Hülle 4, den Klebstoffträger 3 und die Ankerstange 2 umschließt. Auch das Aufreißband 5 befindet sich in der Umverpackung 9. Die Umverpackung 9 ist länger als die Ankerstange 2 und an beiden Enden hermetisch dicht geschlossen, so dass die Umverpackung 9 die Hülle 4, den Klebstoffträger 3, die Ankerstange 2 und den Klebstoff hermetisch dicht einschließt. Die Umverpackung 9 verhindert ein Aushärten des Klebstoffs für wenigstens einige Wochen und vorzugsweise einige Monate oder Jahre, so dass das erfindungsgemäße Ankerset 1 entsprechend lange vor seiner Anwendung aufbewahrt werden kann. Die Umverpackung 9 kann als Bestandteil des erfindungsgemäßen Ankersets 1 aufgefasst werden, auch wenn sie nicht in jedem Fall vorhanden sein muss.

Vor dem Einkleben des Ankersets 1 respektive der Ankerstange 2 in das Ankerloch 6 wird als erstes die Umverpackung 9 entfernt. Als Ankergrund 7 ist im Ausführungsbeispiel ein Holzpfosten gewählt, wie er beispielsweise für Carports, Vordächer oder Pergolen verwendet wird. Das Ankerloch 6 ist im Ausführungsbeispiel ein zylindrisches, in ein Stirnende des den Ankergrund 7 bildenden Holzpfostens gebohrtes Sackloch. Ein Durchmesser des Ankerlochs 6 ist mindestens so groß wie ein Durchmesser der Hülle 4, die den Klebstoffträger 3 und die darin befindliche Ankerstange 2 umschließt. Dadurch lässt sich die in dem Klebstoffträger 3 befindliche Ankerstange 2 mit der den Klebstoffträger 3 und die Ankerstange 2 umschließenden Hülle 4 einfach in das Ankerloch 6 einbringen.

Nach dem Entfernen der Umverpackung 9 wird die in dem Klebstoffträger 3 befindliche Ankerstange 2 und die den Klebstoffträger 3 umschließenden Hülle 4 mit dem geschlossenen Ende der Hülle 4 voraus in das Ankerloch 6 eingebracht, wobei die Ankerstange 2 an dem aus dem Klebstoffträger 3 und aus der Hülle 4 vorstehenden Ende gehalten werden kann. Die Ankerstange 2 wird so tief in das Ankerloch 6 eingebracht, dass ihr Ende aus dem Ankergrund 7 vorsteht. Beispielsweise wird die Ankerstange 2 so tief in das Ankerloch 6 eingebracht, dass die Hülle 4 oder der Klebstoffträger 3 in etwa bündig mit dem Ankergrund 7 ist.

Das Aufreißband 5, dessen freier Abschnitt 11 sich an dem geschlossenen Ende der Hülle 4 befindet, legt sich beim Einbringen in das Ankerloch 6 um, so dass der freie Abschnitt 11 des Aufreißbandes 5 im Ankerloch 6 an der Außenseite der Hülle 4 entlang bis zu einer Mündung des Ankerlochs 6 verläuft und aus dem Ankerloch 6 heraus reicht.

Nach dem Einbringen der in dem Klebstoffträger 3 befindlichen Ankerstange 2 mit der den Klebstoffträger 3 umschließenden Hülle 4 in das Ankerloch 6 wird an dem aus dem Ankerloch 6 heraus reichenden Aufreißband 5 gezogen, wodurch das Aufreißband 5 zunächst die Hülle 4 über deren Länge aufreißt. Beim weiteren Ziehen zieht das Aufreißband 5 die Hülle 4 von dem Klebstoffträger 3, in dem sich die Ankerstange 2 befindet, ab und zieht die Hülle 4 aus dem Ankerloch 6 heraus. Während des gesamten Ziehens am Aufreißband 5 wird die Ankerstange 2 an ihrem aus dem Ankerloch 6 vorstehenden Ende händisch gehalten, so dass sie sich nicht aufgrund des Ziehens am Aufreißband 5 axial aus dem Ankerloch 6 herausbewegt.

Der von der Hülle 4 radial auf der Ankerstange 2 elastisch komprimierte Klebstoffträger 3 expandiert nach dem Abziehen der Hülle 4. Ein Durchmesser des Ankerlochs 6 ist kleiner als der Außendurchmesser des Klebstoffträgers 3, wenn dieser sich außerhalb des Ankerlochs 6 und ohne die Hülle 4 auf der Ankerstange 2 befindet, so dass nach Entfernen der Hülle 4 der Klebstoffträger 3 elastisch mit einer radialen Vorspannung im Ankerloch 6 und auf der Ankerstange 2 anliegt. Dadurch gleicht der Klebstoffträger 3 etwaige Unregelmäßigkeiten des Ankerlochs 6 aus und zentriert die Ankerstange 2 im Ankerloch 6. Die elastische Vorspannung, mit der der Klebstoffträger 3 im Ankerloch 6 und auf der Ankerstange 2 anliegt, reicht aus, um ein Eigengewicht der Ankerstange 2 zu halten. Das heißt, der Klebstoffträger 3 hält die Ankerstange 2 bis zum Aushärten des Klebstoffs gegen ein Herausfallen aus einem über Kopf, das heißt vertikal nach oben gebohrten Ankerloch 6.

Durch sein Expandieren verkleinert der Klebstoffträger 3 freie Volumina im Ankerloch 6 zwischen dem Ankerloch 6 und der Ankerstange 2. Solange der Klebstoff fließfähig ist, bewirkt der Klebstoffträger 3 einen hydraulischen Druck im Klebstoff, der den Klebstoff sowohl radial nach außen gegen eine Lochwand des Ankerlochs 6 als auch radial nach innen gegen die Ankerstange 2 beaufschlagt. Dadurch wird ein guter Formschluss und Stoffschluss des Klebstoffs nach seinem Aushärten sowohl mit dem Ankergrund 7 als auch mit der Ankerstange 2 erreicht.

Nach dem Entfernen der Umverpackung 9 und spätestens nach dem Abziehen der Hülle 4 beginnt der in der Hülle 4 enthaltene Klebstoff auszuhärten. Nach dem Aushärten bildet der Klebstoff eine feste Struktur, die den Klebstoffträger 3 durch die Klebstofföffnungen 8 beziehungsweise zwischen Maschen des im Ausführungsbeispiel gewirkten, schlauchförmigen Klebstoffträgers 3 durchsetzt und die Ankerstange 2 im Ankerloch 6 mit dem Ankergrund 7 verbindet. Der Klebstoff kann nach dem Aushärten starr oder elastisch sein. Er verbindet die Ankerstange 2 durch Formschluss und Stoffschluss mit der Lochwand des Ankerlochs 6, so dass die Ankerstange 2 im Ankerloch 6 befestigt ist, was auch als Verankerung der Ankerstange 2 in dem Ankerloch 6 im Ankergrund 7 aufgefasst werden kann.

### Bezugszeichenliste

- 1: Ankerset
- 2: Ankerstange
- 3: Klebstoffträger
- 4: Hülle
- 5: Aufreißband
- 6: Ankerloch
- 7: Ankergrund
- 8: Klebstofföffnung
- 9: Umverpackung
- 10: Schlaufe
- 11: freier Abschnitt
- 12: haftender Abschnitt

## Patentansprüche

1. Ankerset, mit einer zu einem Einkleben in ein Ankerloch (6) in einem Ankergrund (7) vorgesehenen Ankerstange (2), mit einem elastisch kompressiblen, Klebstoff aufweisenden Klebstoffträger (3), der die Ankerstange (2) umschließt, und mit einer Hülle (4), die den Klebstoffträger (3) umschließt und die ein Aufreißband (5) aufweist, mit dem die Hülle (4) aufreißbar, von der Ankerstange (2) und dem Klebstoffträger (3) abziehbar und aus dem Ankerloch (6) herausziehbar ist.

2. Ankerset nach Anspruch 1, **dadurch gekennzeichnet, dass** der Klebstoffträger (3) von einer der Ankerstange (2) abgewandten Außenseite zu einer der Ankerstange (2) zugewandten Innenseite durchgehende Klebstofföffnungen (8) aufweist.

3. Ankerset nach Anspruch 1 oder 2, **dadurch gekennzeichnet, dass** der Klebstoffträger (3) einen dickenelastischen Netzschlauch und/oder einen festen, elastischen Schaum aufweist.

4. Ankerset nach einem oder mehreren der Ansprüche 1 bis 3, **dadurch gekennzeichnet, dass** der Klebstoffträger (3) zwischen der Ankerstange (2) und der Hülle (4) elastisch komprimiert ist.

5. Ankerset nach einem oder mehreren der vorhergehenden Ansprüche, **dadurch gekennzeichnet, dass** die Hülle (4) einen Schlauch aufweist.

6. Ankerset nach einem oder mehreren der vorhergehenden Ansprüche, **dadurch gekennzeichnet, dass** die Hülle (4) im Ankerloch (6) mit dem Aufreißband (5) der Länge nach aufreißbar ist.

7. Ankerset nach einem oder mehreren der vorhergehenden Ansprüche, **dadurch gekennzeichnet, dass** das Aufreißband (5) von einem ersten Ende bis zu einem zweiten Ende der Hülle (4) und zurück verläuft.

8. Ankerset nach einem oder mehreren der vorhergehenden Ansprüche, **dadurch gekennzeichnet, dass** ein Ende der Ankerstange (2) aus der Hülle (4) vorsteht.

9. Ankerset nach einem oder mehreren der vorhergehenden Ansprüche, **dadurch gekennzeichnet, dass** die Ankerstange (2), der Klebstoffträger (3), der Klebstoff und die Hülle (4) in einer hermetisch dichten Umverpackung (9) enthalten sind.

10. Verfahren zum Einkleben der Ankerstange (2) des Ankersets (1) nach einem oder mehreren der vorhergehenden Ansprüche in ein Ankerloch (6), **dadurch gekennzeichnet, dass** die Ankerstange (2) nach einem Entfernen der eventuellen Umverpackung (9) mit dem den Klebstoff aufweisenden Klebstoffträger (3) und der Hülle (4) in das Ankerloch (6) eingebracht wird, so dass das Aufreißband (5) aus dem Ankerloch (6) heraus reicht, und dass durch Ziehen an dem Aufreißband (5) die Hülle (4) aufgerissen, von dem Klebstoffträger (3), in dem sich die Ankerstange (2) befindet, abgezogen und aus dem Ankerloch (6) heraus gezogen wird.
